(19) Europäisches Patentamt

European Patent Office

Office européen des brevets

(11) **EP 1 070 018 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **99919172.9**

(22) Anmeldetag: **31.03.1999**

(51) Int Cl.$^7$: **C01G 45/00**, H01M 4/48

(86) Internationale Anmeldenummer:
**PCT/EP99/02227**

(87) Internationale Veröffentlichungsnummer:
**WO 99/051526 (14.10.1999 Gazette 1999/41)**

(54) **VERFAHREN ZUR HERSTELLUNG VON LITHIUM-METALL-OXIDEN**

METHOD FOR PRODUCING LITHIUM METAL OXIDES

PROCEDE DE FABRICATION D'OXYDES DE LITHIUM-METAL

(84) Benannte Vertragsstaaten:
**AT BE CH DE DK ES FI FR GB GR IE IT LI LU MC NL PT SE**

(30) Priorität: **07.04.1998 DE 19815611**

(43) Veröffentlichungstag der Anmeldung:
**24.01.2001 Patentblatt 2001/04**

(73) Patentinhaber: **Riedel-de Haen GmbH**
**30926 Seelze (DE)**

(72) Erfinder:
• **KRAMPITZ, Horst**
**D-31867 Pohle (DE)**
• **FOOKEN, Michael**
**D-30926 Seelze (DE)**

(74) Vertreter: **Ricker, Mathias, Dr.Dipl.-Chem.**
**Bardehle-Pagenberg-Dost-Altenburg-Geissler, Isenbruck,**
**Galileiplatz 1**
**81679 München (DE)**

(56) Entgegenhaltungen:
**EP-A- 0 816 292**          **WO-A-98/38133**
**US-A- 5 770 018**

• **PATENT ABSTRACTS OF JAPAN vol. 010, no. 079 (E-391), 28. März 1986 (1986-03-28) & JP 60 225358 A (SANYO DENKI KK), 9. November 1985 (1985-11-09)**

**Beschreibung**

Die vorliegende Erfindung betrifft ein Verfahren zur Herstellung von Lithium-Metall-Oxiden durch Behandlung mit Mikrowellenenergie.

Lithium-Metall-Oxide spielen beim Einsatz in elektrochemischen Zellen eine immer wichtigere Rolle, denn ihre Verwendung als Kathodenmaterial ermöglicht die erwünschten hohen Energiedichten. Mittels dieser Oxide realisierte wiederaufladbare Lithium-Sekundärbatterien finden Einsatz in einer Vielzahl von Anwendungen, beispielsweise tragbaren elektronischen Geräten wie Videokameras, mobilen Telefonen oder Laptop-Computern. Zukünftig werden auch Traktionsbatterien mit dieser Technologie produziert.

Im allgemeinen werden bei Verfahren zur Herstellung von Lithium-Metall-Oxiden Lithium-Verbindungen mit den entsprechenden Metall-Verbindungen zu innigen Gemischen umgesetzt und, je nach Verfahren, gegebenfalls getrocknet. Im Anschluß daran wird die Mischung, je nach Verfahren in einer oder mehreren Stufen, getempert.

So beschreibt die DE 43 27 760 ein Verfahren zur Herstellung von Lithium-Mangan-Oxid, das als aktives Material einer positiven Lithium-Sekundärbatterie dient. In diesem Verfahren wird ein Gemisch von Manganoxid mit Lithiumformiat und/oder Lithiumacetat bei 550 bis 800 °C getempert. Die Reaktionszeit beträgt dabei zwischen 10 und 100 h.

Ein weiteres Verfahren zur Herstellung eines Lithium-Mangan-Oxides, das als Interkalationsverbindung von Interesse für Sekundärbatterien ist, wird in der US 5,135,732 beansprucht. Dort wird durch Vermischen von stöchiometrischen Mengen einer wäßrigen Lösung von Lithiumhydroxid und Manganacetat in Anwesenheit einer Base ein gelartiger Niederschlag gebildet. Dieser wird anschließend unter Bildung eines Xerogels getrocknet und anschließend auf eine Temperatur von 200 bis 600 °C erhitzt. Die Haltezeit beim Temperungsprozeß beträgt dabei 16 h.

Die WO 97/20773 offenbart explizit ein Verfahren zur Herstellung eines Lithium-Mangan-Oxides als Interkalationsverbindung für Lithium-Sekundärbatterien, bei dem ein Lithiumhydroxid mit Mangancarbonat in 3 Schritten bei 450, 550 und 750 °C getempert wird. Die Reaktionszeit beträgt dabei insgesamt 144 h.

In der US 5,629,119 wird die Herstellung der von $LiNiO_2$ als kathodenaktives Material von Lithium-Sekundärbatterien offenbart. Hierbei wird Lithiumhydroxid mit β-$Ni(OH)_2$ vermischt und die Mischung in zwei Stufen bei 650 und 750 °C getempert. Die Gesamtzeit der Temperung beträgt 30 h.

In der gleichen Druckschrift wird auch die Herstellung von kathodenaktiven Lithium-Metall-Oxiden beschrieben, die durch Mischung eines Lithium-Salzes und β-$Ni(OH)_2$ mit entweder $Co_3O_4$ oder $MnO_2$ und anschließender Temperung in zwei Stufen bei 650 und 750 °C erfolgt. Auch hier beträgt die Gesamtzeit der Temperung 30 h.

Ferner offenbart die EP 0 717 455 die Temperung zur Herstellung von Lithium-Mangan-Oxiden in einem Drehrohrofen. Bei diesem Verfahren werden Lithium- und Mangan-Verbindungen vermischt und im Drehrohrofen bei 200 bis 800 °C erhitzt. Die Haltezeiten betragen hierbei 0,5 bis 10 h. Explizit offenbart wird eine Haltezeit von 2 h.

In allen genannten Verfahren nach dem Stand der Technik, die die Herstellung von Kathodenmaterial auf der Basis von Lithium-Metall-Oxiden betreffen, wird die Temperung über konventionelle Heiztechniken, d.h. über die Übertragung von thermischer Energie bewerkstelligt. Es sind gemäß den oben genannten Verfahren Temperungsprozesse bei Temperaturen im Bereich von 200 bis 800 °C nötig, die z.T. länger als 100 h dauern können.

In Anbetracht des obigen Standes der Technik besteht eine Aufgabe der vorliegenden Erfindung darin, ein Verfahren bereitzustellen, das bei der Herstellung von Lithium-Metall-Oxiden sehr kurze Temperungszeiten ermöglicht.

Gelöst wird diese Aufgabe durch ein Verfahren zur Herstellung von Lithium-Metall-Oxiden gemäß Anspruch 1.

Wie sich aus obigem ergibt, wird während der Temperung im erfindungsgemäßen Verfahren eine Behandlung mit Mikrowellenenergie durchgeführt.

Im allgemeinen liegen die verwendeten Frequenzen der Mikrowellenstrahlung im erfindungsgemäßen Verfahren im Bereich von 0,9 bis 30 GHz. Bevorzugt werden die Frequenzen 0,915, 2,45 und 28 GHz. Insbesondere wird die Frequenz von 0,915 GHz eingesetzt.

Ein Drehrohröfen ist mindestens eine der im Verfahren verwendeten Vorrichtungen zum Tempern.

Vor allem bei der Verwendung von Mikrowellenstrahlung im Dezimeterbereich können so signifikant kürzere Temperungszeiten erreicht werden. Im allgemeinen betragen die Temperungszeiten im erfindungsgemäßen Verfahren etwa 10 s bis 60 min, vorzugsweise etwa 1 bis 20 min, insbesondere etwa 2 bis 8 min.

Prinzipiell können im Rahmen des erfindungsgemäßen Verfahrens alle Lithium-Verbindungen eingesetzt werden. Vorzugsweise werden jedoch $Li_2O$, LiOH, LiCl, $LiNO_3$, $Li_2CO_3$, $Li_2SO_4$, Lithium-Carboxylate wie z.B. Li-Formiat oder Li-Acetat, oder ein Gemisch aus zwei oder mehr dieser eingesetzt.

Für die im erfindungsgemäßen Verfahren verwendeten Metalle bestehen prinzipiell keine Beschränkungen. Vorzugsweise wird eine Verbindung eingesetzt, die B, Al, Ti, V, Cr, Mn, Fe, Co, Ni, Zr, Nb, Mo, Ru oder W umfaßt.

Insbesondere werden im erfindungsgemäßen Verfahren Mangan-Verbindungen eingesetzt. Auch hier existieren prinzipiell keine Beschränkungen. Vorzugsweise werden jedoch MnO, $MnO_2$, $Mn_2O_3$, $Mn_3O_4$, MnOOH, $MnCO_3$, $MnSO_4$, $Mn(NO_3)_2$, Mangancarboxylate wie z.B. Mn-Formiat oder Mn-Acetat, oder ein Gemisch aus zwei oder mehr dieser Verbindungen eingesetzt.

Als im Rahmen des erfindungsgemäßen Verfahrens herstellbare Lithium-Metalloxide sind prinzipiell alle derartigen Oxide herstellbar, sofern sich aus diesen Oxiden Lithium elektrochemisch freigesetzen läßt, d.h. wenn sich die neben Lithium im Oxid vorhandenen Metalle nicht in ihrer höchsten Oxidationsstufe befinden.

Im einzelnen sind unter anderem zu nennen:

$Li_xTiO_2$ (0 < $x$ ≤ 1), $Li_xTi_2O_4$ (0 < $x$ ≤ 2),

$Li_xV_2O_4$ (0 < $x$ ≤ 2,5), $Li_xV_2O_3$ (0 < $x$ ≤ 3,5), $Li_xVO_2$ (0 < $x$ ≤ 1),

$Li_xCr_2O_3$ (0 < $x$ ≤ 3), $Li_xCr_3O_4$ (0 < $x$ ≤ 3,8),

$Li_xMnO_2$ (0 < $x$ ≤ 2), $Li_xMn_2O_4$ (0 < $x$ ≤ 2), $Li_xMnO_3$ (0 < $x$ ≤ 1),

$Li_xFe_2O_3$ (0 < $x$ ≤ 2), $Li_xFe_3O_4$ (0 < $x$ ≤ 2), $LiCoO_2$, $LiNiO_2$,

$Li_xZrO_2$ (0 < $x$ ≤ 1), $Li_xNbO_2$ (0 < $x$ ≤ 2), $Li_xMoO_2$ (0 < $x$ ≤ 2),

$Li_xRuO_2$ (0 < $x$ ≤ 1), $Li_xWO_2$ (0 < $x$ ≤ 1), $Li_xWO_3$ (0 < $x$ ≤ 1),

oder ein Gemisch aus zwei oder mehr davon.

Darüberhinaus können die im erfindungsgemäßen Verfahren hergestellten Lithium-Metall-Oxide noch zusätzlich ein weiteres Metall oder ein Gemisch aus zwei oder mehr Metallen als Dotierungsmittel enthalten, wobei vorzugsweise ein Metall der Gruppen IIa, IIIa, IVa, IIb, IIIb, IVb, VIb, VIIb oder VIII des Periodensystems oder ein Gemisch aus zwei oder mehr davon, und insbesondere Eisen, Cobalt, Nickel, Titan, Bor, Aluminium oder ein Gemisch aus zwei oder mehr davon als Dotierungsmittel verwendet werden.

Zur Herstellung derartiger Metall-dotierter Lithium-Mangan-Oxide wird im erfindungsgemäßen Verfahren eine Verbindung, vorzugsweise ein Salz eines Metalls oder ein Gemisch aus zwei oder mehr davon, wie vorstehend definiert, vorzugsweise ein Eisen-, Cobalt- oder Nickel-Salz oder ein Gemisch aus zwei oder mehr davon in der gewünschten Menge eingesetzt.

Die Umsetzung der Edukte zu den Gemischen kann im erfindungsgemäßen Verfahren nach allen denkbaren Verfahren erfolgen. Möglich ist beispielsweise die Umsetzung unter hydrothermalen Bedingungen, d. h. die Umsetzung aus erhitzten wäßrigen Lösungen bei subatmosphärische Drücken. Diesbezügliche Details lassen sich der DE-A 196 54 688.5 entnehmen.

An die Umsetzung können sich auch ein oder mehrere Waschprozesse zur Entfernung gelöster Verunreinigungen anschließen. Zusätzlich kann im vorliegenden Verfahren das bei der Umsetzung erhaltene Produkt zusätzlich getrocknet werden, gegebenenfalls unter Einsatz von Mikrowellenenergie.

Eine Reduzierung des Lithium-Gehaltes bei erhöhtem Lithium-Einsatz oder eine generelle Reduzierung dieses Gehalts ist nach der eigentlichen Umsetzung mittels eines Säurelaugungsprozesses möglich, der vorzugsweise vor der wahlweisen Trocknung oder der Temperung erfolgen kann. Dabei ist zu beachten, daß eine Abtrennung der wäßrigen Phase vor der Trocknung erfolgen kann, wobei jedoch im allgemeinen, z.B. bei der Sprühtrocknung, darauf verzichtet werden kann.

Die Kristallinität und die spezifische Oberfläche des gemäß dem erfindungsgemäßen Verfahren erhaltenen Lithium-Metall-Oxids kann durch eine gezielte Temperatur-, Druck- und Reaktionszeitsteuerung während der Umsetzung und/oder der Trocknung sowie durch eine gezielte Steuerung der verwendeten Frequenzen der Mikrowellenstrahlung, des Druckes sowie der Reaktionszeit beim Temperungsprozeß beeinflußt werden.

Eine Beeinflussung der Partikelgröße des erhaltenen Lithium-Metall-Oxids kann durch Berücksichtigung der eingesetzten Metall-Rohstoffe durch vorangehende Naß- oder Trockenmahlprozesse erfolgen. Ebenso ist eine Vermahlung des nassen oder auch getrockneten Lithium-Metall-Oxids zur Kornverfeinerung möglich.

Im Rahmen des vorliegenden Verfahrens können insbesondere die folgenden Reaktionsvarianten erfolgreich durchgeführt werden:

$$4\ MnO_2 +\quad 2\ LiOH \rightarrow 2\ LiMn_2O_4 + H_2O + \tfrac{1}{2}\ O_2$$

$$3\ MnO_2 + MnO + 2\ LiOH \rightarrow 2\ LiMn_2O_4 + H_2O$$

$$MnO_2 + MnOOH + LiOH \rightarrow LiMn_2O_4 + H_2O$$

$$2\ MnO_2 + Mn_2O_3 + 2\ LiOH \rightarrow 2\ LiMn_2O_4 + H_2O$$

$$10\ MnO_2 + 2\ Mn_3O_4 + 8\ LiOH \rightarrow 8\ LiMn_2O_4 + H_2O$$

$$3\ MnO_2 + MnCO_3 + 2\ LiOH \rightarrow 2\ LiMn_2O_4 + H_2O + CO_2$$

Vorzugsweise handelt es sich bei dem erfindungsgemäßen bzw. erfindungsgemäß hergestellten Lithium-Metall-Oxid um eine sogenannte Interkalationsverbindung. Derartige Verbindungen können aktive $Li^+$-Ionen in einem Wirtsgitter speichern, wobei das Lithium in Zwischengitterplätzen des Wirtsmaterials eingelagert wird. Demgemäß sind insbesondere derartige Interkalationsverbindungen für elektrochemische Zellen nutzbar. Die Ein- und Auslagerung kann mittels eines Lithiumionen leitenden Elektrolyten mit hoher Reversibilität, vorzugsweise $LiClO_4$, $LiBF_4$, $LiPF_6$, $LiSO_3CF_3$, $LiAsF_6$, elektrochemisch erfolgen. Kombiniert man zwei verschiedene Interkalationsverbindungen mit sehr unterschiedlichen elektrochemischen Potentialen, so erhält man einen Akkumulator, in dem beim Lade- und Entladeprozeß Lithium-Ionen zwischen den Wirtsmaterialien hin und her wandern. Elektrochemische Zellen dieser Art bezeichnet man als Lithium-Ionen-Zellen. Bei der Verwendung eines hergestellten Lithium-Metall-Oxids bietet sich als Wirtsmaterial für die Anode insbesondere eine kohlenstoffhaltige Substanz wie z.B. Graphit oder Koks an.

Das Lithium-Metall-Oxid stellt dabei, gegebenenfalls in Verbindung mit einem Bindemittel wie z.B. PTFE und Acetylenruß, die Kathode dar, während die Anode als Wirtsmaterial vorzugsweise eine kohlenstoffhaltige Substanz, wie oben definiert, oder metallisches Lithium aufweist.

Bei der Wahl der Anode bestehen bei der Verwendung des hier beschriebenen Lithium-Metall-Oxids als Kathode prinzipiell keine besonderen Beschränkungen. Die verwendbaren Verbindungen müssen lediglich für Lithiumionen interkalierbar sein und gegenüber der Kathode eine höhere elektrochemische Aktivität besitzen.

Die Präparation des hergestellten Lithium-Metall-Oxids als Batterie-Kathodenmaterial erfolgt in einer an sich bekannten Weise. In einer elektrochemischen Zelle kann dieses Kathodenmaterial in an sich bekannter Weise gegen eine Lithium-Kationen aufnehmende Anode eingesetzt werden. Die Elektroden solcher Zellen in fertig montiertem und verschlossenem Zustand sind gewöhnlich ungeladen, d.h. alles verfügbare Lithium ist in der positiven Elektrode eingelagert, während die Wirtsstruktur der negativen Elektrode sich in einem nicht-lithiumbeladenen Zustand befindet. Bei der ersten Ladung findet eine Auslagerung des Lithiums aus dem positiven Wirtsgitter (Kathode) und eine Einlagerung in das negative Wirtsgitter (Anode), vorzugsweise eine Kohlenstoffinatrix, statt. Ein an die Kohlenstoffmatrix irreversibel angelagerter Teil der Lithium-Ionen, der dem weiteren Interkalationsmechanismus entzogen wird, kann durch eine überstöchiometrische Lithiummenge im Lithium-Metall-Oxid ausgeglichen werden.

Der prinzipielle Aufbau derartiger elektrochemischer Zellen ist bekannt und wird u.a. von J.M. Tarascon in *J. Electrochem. Soc.* 140, S. 3071 ff., beschrieben.

Die vorliegende Erfindung wird nunmehr anhand von Ausführungsbeispielen beschrieben.

**Beispiele**

Die Beispiele betreffen die Temperung eines Lithiummanganoxides der Zusammensetzung $Li_{1,05}Mn_2O_{4,55}$ mit Mangan in der Wertigkeitsstufe 3,9 und einer BET-Oberfläche von 78 $m^2$/g. Das Ziel der Temperung ist die Reduktion der Manganwertigkeitsstufe auf ca. 3,5, eine Verringerung des Sauerstoffanteils auf ca. 4,0 und eine Verkleinerung der BET-Oberfläche auf ca. 1,5 $m^2$/g.

*Vergleichsbeispiel 3*

In eine Schale aus Aluminiumoxid-Keramik wurden 1000 g eines Lithium-Mangan-Oxides, wie oben beschrieben, in einer Schichtdicke von 2 cm vorgelegt.

Die Probe wurde mit der Schale in einen Mikrowellenofen eingebracht, der zur Temperaturüberwachung mit einem Platin/Rhodium-Temperaturfühler versehen war. Die Einbringung der Mikrowellenenergie erfolgte über ein 2,45 GHz-Magnetron, das über den Temperaturfühler geregelt wurde.

Nach 15 min wurde die gewünschte Temperungstemperatur von 800 °C erreicht. Diese Temperatur wurde dann für weitere 15 min aufrechterhalten. Wie der Tabelle 1 zu entnehmen ist, wurde der erwünschte Temperungseffekt erreicht.

*Vergleichsbeispiel 1:*

Wie in Vergleichsbeispiel 3 wurden 1000 g Lithium-Mangan-Oxid in einer Schichtdicke von 2 cm in einer Schale aus Aluminiumoxid-Keramik verwendet.

Ein Muffelofen mit Widerstandsheizung wurde auf 800 °C vorgeheizt. In den Ofen wurde die Probe mit Schale eingebracht und bei einer konstanten Ofentemperatur von 800 °C 30 min getempert. Nach der 30-minütigen Temperung wurde im Lithium-Mangan-Oxid eine Temperatur von nur 230 °C erreicht. Wie der Tabelle 1 zu entnehmen ist, konnte kein Temperungseffekt erzielt werden.

**Tabelle 1:** Zu Vergleichsbeispiel 3 und Vergleichsbeispiel 1

|  | Vergleichsbeispiel 3 | Vergleichsbeispiel 1 |
|---|---|---|
| Summenformel | $Li_{1,02}Mn_2O_{4,04}$ | $Li_{1,04}Mn_2O_{4,42}$ |
| Mn-Wertigkeitsstufe | 3,54 | 3,88 |
| BET-Oberfläche / (m$^2$/g) | 1,3 | 78 |

*Beispiel 1*

Ein Lithiummanganoxid, wie oben beschrieben, wurde mit einem Durchsatz von 90 kg/h durch ein keramisches, mikrowellendurchlässiges Drehrohr mit einem Innendurchmesser von 40 cm gefahren, das auf einer Länge von 4 m beheizt war. Zur Durchmischung des Reaktionsgutes war das Drehrohr mit einer Förderschnecke bestückt. Die Temperatur wurde während der Haltezeit des Lithiummanganoxides im Drehrohr auf 800 °C gehalten. Die Drehzahl des Drehrohrs wurde so eingestellt, daß die Verweilzeit des Lithiummanganoxides in der beheizten Zone des Drehrohrs 30 min betrug.

Die Beheizung des Rohres erfolgte mittels zweier Magnetrone einer Leistung von jeweils 30 kW. Die Frequenz der verwendeten Mikrowellen betrug 0,915 GHz.

Wie der untenstehenden Tabelle zu entnehmen ist, entsprach das erhaltene Lithiummanganoxid den oben formulierten Erwartungen.

*Vergleichsbeispiel 2*

Ein Muffelofen wurde mit 500 kg des oben genannten Lithiummetalloxides beschickt und auf eine Temperatur von 800 °C gebracht.

Nach 160 h wurde die Temperung unterbrochen und die Temperatur im Mittelpunkt der Probe gemessen. Diese betrug lediglich 580 °C. Der Temperungsvorgang wurde daraufhin abgebrochen, da es sich zeigte, daß die Erzielung der gewünschten Temperatur in der gesamten Probe in einem für die großtechnische Produktion akzeptablen Zeitrahmen unmöglich ist.

Die in unten aufgeführter Tabelle 2 angegebenen Werte bzgl. des Vergleichsbeispiels 2 beziehen sich auf die Analyse der sich im Mittelpunkt befindlichen Probe, die nach 160 h eine Temperatur von 580 °C aufwies.

**Tabelle 2:** Zu Beispiel 1 und Vergleichsbeispiel 2

| | Beispiel 1 | Vergleichsbeispiel 2 |
|---|---|---|
| Summenformel | $Li_{1,0}Mn_2O_{4,0}$ | $Li_{1,06}Mn_2O_{4,15}$ |
| Mn-Wertigkeitsstufe | 3,5 | 3,71 |
| BET-Oberfläche / $(m^2/g)$ | 1,5 | 9,5 |

**Patentansprüche**

1. Verfahren zur Herstellung von Lithium-Metall-Oxiden aus mindestens einer Lithium-Verbindung und mindestens einer Metall-Verbindung durch ein mindestens einen Temperungsschritt umfassendes Verfahren, worin der mindestens eine Temperungsschritt eine Behandlung mit Mikrowellenenergie umfaßt und mindestens eine der im Verfahren verwendeten Vorrichtungen zum Tempern ein Drehrohrofen ist.

2. Verfahren nach Anspruch 1, worin die mindestens eine eingesetzte Lithium-Verbindung gewählt ist aus der Gruppe bestehend aus $Li_2O$, LiOH, LiCl, Li-$NO_3$, $Li_2CO_3$, $Li_2SO_4$, Lithium-Carboxylate und einem Gemisch aus zweien oder mehreren dieser Verbindungen.

3. Verfahren nach Anspruch 1 oder Anspruch 2, worin als die mindestens eine Metall-Verbindung eine Mangan-Verbindung eingesetzt wird.

4. Verfahren nach Anspruch 3, worin die mindestens eine eingesetzte Mangan-Verbindung gewählt ist aus der Gruppe bestehend aus MnO, $MnO_2$, $Mn_2O_3$, $Mn_3O_4$, MnOOH, $MnCO_3$, $MnSO_4$, $Mn(NO_3)_2$, Mangan-Carboxylate und einem Gemisch aus zweien oder mehreren dieser Verbindungen.

5. Verfahren nach einem der Ansprüche 1 bis 4, welches durchgeführt wird mit einer Mikrowellenstrahlung in einem Frequenzbereich von 0,9 bis 30 GHz.

**Claims**

1. Process for the preparation of lithium-metal-oxides from at least one lithium compound and at least one metal compound by a process which comprises at least one heat treatment step, wherein the at least one heat treatment step comprises a treatment with microwave energy and at least one of the apparatus used in the process for the heat treatment is a rotary tube furnace.

2. Process according to Claim 1, wherein the at least one lithium compound is selected from the group consisting of $Li_2O$, LiOH, LiCl, $LiNO_3$, $Li_2CO_3$, $Li_2SO_4$, lithium carboxylates and mixtures of two or more of these compounds.

3. Process according to Claim 1 or Claim 2, wherein as the at least one metal compound a manganese compound is used.

4. Process according to Claim 3, wherein the at least one manganese compound is selected from the group consisting of MnO, $MnO_2$, $Mn_2O_3$, $Mn_3O_4$, MnOOH, $MnCO_3$, $MnSO_4$, $Mn(NO_3)_2$, manganese carboxylates and a mixture of two or more of these compounds.

5. Process according to any of Claims 1 to 4, which is carried out with a microwave radiation in a frequency range of from 0.9 to 30 GHz.

**Revendications**

1. Procédé pour la préparation des lithium-métal-oxydes d' au moins un composé de lithium et au moins un composé de métal par un procédé comprenant au moins une étape de trempe à chaud, où 1' étape de trempe à chaud comprends un traitement avec énergie micro-ondes et au moins une monture utilisée pour la trempe à chaud est une fourneau à tube articulé.

2. Procédé selon revendication 1, où le composé de lithium utilisé est choisi du groupe consistant en $Li_2O$, LiOH, LiCl, $LiNO_3$, $Li_2CO_3$, $Li_2SO_4$, carboxyle de lithium et un mélange de deux ou plusieurs de ces composés.

3. Procédé selon revendication 1 ou 2, où le composé de métal utilisé est un composé de manganèse.

4. Procédé selon revendication 3, où le composé de manganèse utilisé est choisi du groupe consistant en MnO, $MnO_2$, $Mn_2O_3$, $Mn_3O_4$, MnOOH, $MnCO_3$, $MnSO_4$, $Mn(NO_3)_2$, carboxyle de manganèse et un mélange de deux ou plusieurs de ces composés.

5. Procédé selon revendication 1 à 4, où le procédé est exécuté avec une radiation micro-ondes ayant une gammes des fréquences de 0,9 à 30 GHz.